# EUROPÄISCHE PATENTSCHRIFT

(11) **EP 1 611 800 B1**
(45) Veröffentlichungstag und Bekanntmachung des Hinweises auf die Patenterteilung: **12.11.2008**
(21) Anmeldenummer: 05013427.9
(22) Anmeldetag: 22.06.2005
(51) Int. Cl.: A23L 1/36, A23J 1/14

(54) **Proteinreiches, pflanzliches Lebensmittel und Verfahren zu seiner Herstellung**
Vegetable food product rich in protein and method for its preparation
Produit alimentaire végétal riches en protéines et procédé de leur préparation

(30) Priorität: 28.06.2004 DE 102004031647
(43) Veröffentlichungstag der Anmeldung: 04.01.2006
(73) Patentinhaber: Fachhochschule Fulda vertreten durch ihren Präsidenten, 36039 Fulda (DE)
(72) Erfinder: Ahlert, Burkhard. Prof.Dr., 30974 Wennigsen (DE); Anke, Knoblauch. Dr., 36041 Fulda (DE); Ceré, Sybille, CH-3075 Rüfenacht (CH); Ostermann, Sabrina., 99330 Crawinkel (DE); Tscherkasska, Dana., 36037 Fulda (DE); Hupfeld, Katarina, 36037 Fulda (DE); Baun, Anne., 36137 Grossenlüder (DE); Brennan, Isolde., 63505 Langenselbold (DE); Grosse, Nadine., 63571 Gelnhausen (DE); Kühn, Judith., 63571 Gelnhausen (DE); Wiesel, Stefanie., 36037 Fulda (DE); Knauer, Kristin., 36037 Fulda (DE); Bischof, Susanne., 99891 Fischbach (DE); Essenwanger, Christine., 87544 Blaichach (DE); Hess, Stefanie., 97348 Rödelsee (DE)
(74) Vertreter: Freiherr von Schorlemer, Reinfried

(56) Entgegenhaltungen:
- WO-A-02/089598
- WO-A-03/034836
- WO-A-03/088760
- WO-A-20/04000031
- WO-A-20/04000032
- US-A1- 2004 101 614
- US-B1- 6 361 990
- ROZAN P ET AL: "Detoxication of rapeseed meal by Rhizopus oligosporus sp-T3: A first step towards rapeseed protein concentrate" INTERNATIONAL JOURNAL OF FOOD SCIENCE AND TECHNOLOGY, Bd. 31, Nr. 1, 1996, Seiten 85-90, XP002346527 ISSN: 0950-5423
- MURRAY ET AL: "Rapeseed: a potential global source of high quality plant protein" ASIA PACIFIC FOOD INDUSTRY, AP TRADE PUBLICATOINS, SINGAPORE, SG, April 2001 (2001-04), Seiten 30-34, XP002207606 ISSN: 0218-2734
- VIG ADARSH PAL ET AL: "Beneficial effects of Rhizopus oligosporus fermentation on reduction of glucosinolates, fibre and phytic acid in rapeseed (Brassica napus) meal" BIORESOURCE TECHNOLOGY, Bd. 78, Nr. 3, Juli 2001 (2001-07), Seiten 309-312, XP002346528 ISSN: 0960-8524

## Beschreibung

Die Erfindung betrifft ein proteinreiches, pflanzliches Lebensmittel und ein Verfahren zu dessen Herstellung.

Als proteinreiches Lebensmittel sind z. B. Sojabohnen bekannt, die vor allem in vielen asiatischen Ländern sowie in Nord- und Südamerika angebaut werden. Zur Verbesserung des Geschmacks werden Sojabohnen zu zahlreichen Produkten wie z. B. Sojamilch, Tofu, Miso oder Tempeh verarbeitet. Die Herstellung von Tempeh erfolgt z. B. durch Fermentation unter Anwendung von Schimmelpilz-Kulturen, insbesondere Aspergillas oxyzae (z. B. USA Patentschriften 3,228,773 und 3,243,301). Außerdem ist es bekannt, mit Hilfe verschiedener Rezepturen zahlreiche Speisen aus diesen Produkten zuzubereiten (z. B. USA-Patentschrift 4,151,307). Schließlich wird aus zerschroteten Sojabohnen durch Pressen und/oder Extraktion Sojaöl gewonnen. Die dabei erhaltenen Rückstände, meistens als Preßkuchen bezeichnet, werden als Viehfutter verwendet.

Es ist außerdem bereits bekannt, statt Sojabohnen die bei der Gewinnung von Rapsöl erhaltenen Rückstände zur Herstellung von proteinreichen, pflanzlichen Lebensmitteln zu verwenden und unerwünschte Substanzen durch Fermentierung der Rückstände mit Schimmelpilzen abzubauen. [ROZAN et al in "Detoxication of rapeseed meal by Rhizopus oligosporus Sp-T3: A first step towards rapeseed protein concentrate", INTERNATIONAL JOURNAL OF FOOD SCIENCE AND TECHNOLOGY, Bd. 31; Nr. 1, 1996, Seiten 85-90; VLG ADARSH PAL et al in "Beneficial effects of Rhizopus oligosporus fermentation on reduction of glucosinolates, fibre and phytic acid in rapeseed (Brassica napus) meal", BIORESOURCE TECHNOLOGY, Bd. 78, Nr. 3 Juli 2001 (2001-07), Seiten 309-312]. Auch die Herstellung von Proteinisolat durch übliche Extraktionsverfahren ist bekannt [Murray et al in "Rapeseed: a potential global source of high quality plant protein", ASIA PACIFIC FOOD INDUSTRY, AP TRADE PUBLICATIONS, SINGAPORE, SG, April 2001 (2001-04), Seiten 30-34].

Die vorliegende Erfindung hat sich die Aufgabe gestellt, ein vergleichbares proteinhaltiges Lebensmittel aus Raps zur Verfügung zu stellen, der auch im europäischen Bereich und in Deutschland angebaut wird und analog zu Sojabohnen einen hohen Proteingehalt hat. Dabei soll vor allem ein Lebensmittel geschaffen werden, das möglichst fettarm ist und einen geringen Gehalt an unerwünschten Bestandteilen hat.

Zur Lösung dieser Aufgabe besteht das proteinreiche Lebensmittel erfindungsgemäß ganz oder teilweise aus einem fettarmen Fenmentationsprodukt, das aus durch die Gewinnung von Rapsöl mit geschältem Raps erhaltenen Rückständen hergestellt ist.

Die Erfindung macht sich einerseits die Tatsache zur Nutze, daß Raps auch in heimischen Gegenden immer häufiger insbesondere zu dem Zweck angebaut wird, der Ernährung dienendes Rapsöl zu erzeugen oder das erhaltene Rapsöl zu technischem Öl, insbesondere Biodiesel weiterzuverarbeiten. Andererseits schlägt die Erfindung vor, zur Herstellung des Lebensmittels nicht die ganze Frucht, sondern lediglich die bei der Ölherstellung mit geschältem Raps erhaltenen Rückstände bzw. den Preßkuchen zu verwenden. Dadurch wird anders als bei der Verarbeitung von Sojabohnen ein weitgehend von seinen Ölbestandteilen befreites und damit fettarmes Produkt erhalten, das zwar gegenüber dem Ausgangsprodukt Raps in hohem Maße energiereduziert ist, sich im übrigen aber wie die Frucht selbst durch einen hohen Gehalt an Proteinen und anderen vorteilhaften Inhaltsstoffen auszeichnet, während der Gehalt an unerwünschten Bestandteilen stark reduziert ist. Das erfindungsgemäße Lebensmittel ist daher u. a. für ältere Menschen und solche Personen gut geeignet, die eine fettarme, pflanzliche Ernährung bevorzugen. Außerdem ergibt sich der Vorteil, daß bei der Ölherstellung keine Überproduktion an Rückständen zu befürchten ist, die Rückstände vielmehr einer sinnvollen Anwendung zugeführt werden.

Das erfindungsgemäße Lebensmittel wird nachfolgend anhand seiner Eigenschaften, seiner Herstellung und seiner Weiterverarbeitung zu verschiedenen Speisen beispielhaft erläutert.

Als Ausgangsprodukt für das erfindungsgemäße Lebensmittel dienen Rückstände aus der Rapsölgewinnung, die nach der Pressung und/oder Extraktion einen deutlich reduzierten Ölanteil aufweisen und daher im Vergleich zum Ausgangsprodukt fett-reduziert sind. Vorzugsweise werden dabei Rückstände verwendet, die bei der Verarbeitung von Rapssaat aus dem ökologischen Anbau erhalten werden, um ein von Schadstoffen weitgehend freies Produkt zu gewährleisten. Mit besonderem Vorteil werden außerdem Rückstände aus einer Rapsölproduktion verwendet, die mit geschältem Raps erfolgt, um den Phenolgehalt niedrig zu halten, den Geschmack zu verbessern und eine helle Färbung zu bekommen.

Da ein beim Pressen erhaltener Preßkuchen eine feste und trockene Struktur besitzt, ist er nicht direkt fermentierbar. Der Preßkuchen wird daher zunächst durch verschiedene Vorbereitungsstufen in eine für die Fermentation geeignete Form gebracht. Der Preßkuchen wird zu diesem Zweck erfindungsgemäß zunächst zerkleinert, angefeuchtet, vorzugsweise pasteurisiert und auf feste pH-Werte eingestellt, um ihn als Substrat für die Fermentation geeignet zu machen. Als Schimmelpilz-Kultur für die Fermentation wird vorzugsweise ein Schimmelpilz der Gattung Rhizopus, insbesondere Rhizopus microsporus var. oligosporus (Stammanmeldungsnummer CBS 338.62 oder NRRL 2710) verwendet. Als geeigneter Bereich für die pH-Werte wird hier ein Bereich zwischen pH = 3,5 und pH = 4,5 angesehen. Die Befeuchtung erfolgt beim erfindungsgemäßen Verfahren so, daß sich ein Bereich von Aw = 0,6 bis Aw = 0,96 ergibt. Die anschließende Fermentation wird dann bei Temperaturen zwischen 25 °C und 35 °C, vorzugsweise zwischen 30 °C und 32 °C und unter aeroben Bedingungen durchgeführt, wobei die Luft bei der Oberflächenfermentation der Umgebung entnommen oder zwangsweise zugeführt wird. Die Schichtdicke des Substrats bei der Fermentation wird z. B. auf Werte zwischen 2 cm und 10 cm eingestellt. Nach einer Fermentationsdauer von vorzugsweise 16 h bis 48 h wird das erhaltene Produkt vorzugsweise erneut pasteurisiert.

Das Fermentationsprodukt kann jetzt direkt, d. h. frisch verarbeitet werden. Alternativ ist es möglich, das Fermentationsprodukt durch Kühlung, Gefrieren oder Anwendung einer modifizierten oder kontrollierten Atmosphäre für einen späteren Gebrauch haltbar zu machen. Hierbei ist auch die Anwendung von Verfahren möglich, die unter Bezeichnung "Cook and Chill" bekannt sind.

Ein besonderer Vorteil des erfindungsgemäßen Fermentationsproduktes liegt in seinem veränderten Fett- und Eiweißgehalt gegenüber der Ausgangssaat. Während ungeschälte Rapssaat normalerweise einen Fettgehalt von etwa Gew. 40 % bis Gew. 45 % und einen Proteingehalt von etwa 20 Gew. % hat, sinkt der Ölgehalt nach der ersten und bevorzugt einzigen Pressung während der Ölgewinnung auf ca. 15 Gew. % ab, während der Proteingehalt im wesentlichen unverändert bleibt oder sogar leicht ansteigt. Nicht erwünschte, die Qualität des Fermentationsprodukts mindernde Bestandteile können zumindest teilweise durch vorheriges Schälen der Rapssaat entfernt werden.

### Beispiel

Es wird eine Charge von 40 g eines Preßkuchens verwendet, der bei der Ölgewinnnung durch Pressen von geschältem Raps erhalten wurde. Das Schälen wurde dabei z. B. durch Erhitzung der Charge mit heißem Wasser auf 80 °C bis 100 °C und nachfolgendes Schälen mit der Hand durch Reiben durchgeführt. Die Charge wird mit 44 ml Wasser und 6 ml Essigsäure gut vermischt und zu einem ca. 1 cm dicken Kuchen geformt. Der Kuchen wird auf ein Fliegengitter gelegt, das auf einem mit 500 ml Wasser gefülltem Behälter angeordnet ist. Anschließend wird der Kuchen für ca. 30 min. durch Erhitzen des Wassers gedämpft.

Nach dem Dämpfen wird der Preßkuchen zerkleinert, abgekühlt und mit dem Schimmelpilz Rhizoporus microsporus geimpft, indem eine wässrige Schimmelpilz-Lösung mit einem Zerstäuber auf den Kuchen aufgesprüht und dieser dann gut durchgeknetet wird. Die Herstellung der Schimmelpilz-Lösung erfolgte dabei dadurch, daß ein mit dem Schimmelpilz bewachsenes Schrägagar-Röhrchen mit 10 ml Wasser gefüllt und gut geschüttelt wurde, um die Microorganismen im Wasser zu suspendieren. Das so erhaltene Präparat wird in Fliegengitter eingepackt, in einen Fermenter gelegt und in einen Brutschrank gestellt, wobei durch loses Auflegen eines Deckels sichergestellt wird, daß das Präparat genug Sauerstoff bekommt und entstehendes Gas entweichen kann. Anschließend erfolgt die Fermentation bei 30 °C, vorzugsweise unter Erhaltung der Feuchtigkeit, für ca. 36 h, bis das Präparat mit einer weißen Schimmelpilzschicht bedeckt ist. Eine danach erfolgende Pasteurisierung erfolgt bei 80 °C bis 100 °C und führt zum erfindungsgemäßen, fettarmen und proteinreichen Lebensmittel in Form eines halbfesten, schneid- und bearbeitbaren Kuchens.

Das erhaltene Fermentationsprodukt zeichnet sich durch einen Proteingehalt von 29,33 Gew. % im Vergleich zu 24,50 Gew. % vor der Fermentation aus. Die Fermentation führt daher überraschend zu einem erhöhten Eiweißgehalt.

Der Gehalt des erfindungsgemäßen Produkts an essentiellen Aminosäuren ist bei Anwendung moderner Rapssorten im Vergleich zu Soja-Tempeh verbessert, wenn die Referenzproteine (g/100 g Protein) der FAO (Food and Agriculture Organization) zugrunde gelegt werden. Eine beispielhafte Rapssorte führt zu folgenden Werten:

| **Aminosäure** | **Rapsprotein** | **Sojaprotein** | **FAO-Referenz-protein** |
|---|---|---|---|
| Isoleucin | 4,0 | 4,5 | 4,0 |
| Leucin | 7,0 | 7,8 | 7,0 |
| Lysin | 5,8 | 6,4 | 5,5 |
| Methionin/ Cystein ¹⁾ | 3,6 | 2,9 | 3,5 |
| Phenylalanin/ Tyrosin ¹⁾ | 6,9 | 8,2 | 6,0 |
| Threonin | 4,5 | 4,0 | 4,0 |
| Thryptophan | 1,3 | 1,3 | 1,0 |
| Valin | 5,0 | 4,8 | 5,0 |

| | | | |
|---|---|---|---|
| ¹⁾ Cystein und Tyrosin sind keine essentiellen AS, sie entstehen beim Abbau von Methionin bzw. Phenylalanin. | | | |

Daraus ist ersichtlich, daß das erfmdungsgemäße Fermentationsprodukt dem FAO-Proteinstandard im wesentlichen optimal entspricht. Dadurch kann insbesondere verschiedenen Diätansprüchen genügt werden.

Das erfindungsgemäße Fermentationsprodukt kann auf vielfältige Weise zur Zubereitung von fertigen Speisen mit verschiedenen Zutaten angereichert und gewürzt werden. Dazu wird der Fermentationskuchen vorzugsweise zerkleinert, mit Zutaten nach Wahl oder einer Rezeptur vermischt und anschließend gebacken, gebraten oder frittiert. Insbesondere können auf diese Weise eiweißreiche Kuchen, Kekse, Frühlingsrollen od. dgl. erhalten werden. Ein wichtiges Merkmal der Erfindung besteht dabei vor allem in der Möglichkeit, daß ohne Anwendung zusätzlicher Fette bzw. Öle gebacken und gebraten werden kann.

### Beispiele

### 1. Kuchen

Die Verfahrensschritte sind wie folgt:
- Hefeteig ausrollen
- Tempeh zerkleinern
- mit Ei und saurer Sahne mischen
- mit Pfeffer, Salz, Kümmel, gedünsteten Zwiebeln und Schinken würzen
- Masse auf Teig geben
- backen.

Es wird ein Kuchen mit einem knusprigen Teig und einer bißfesten Masse als Auflage erhalten. Der Teig ist golden-braun, die Masse grün-braun. Der Geruch ist aromatisch. Der Geschmack ist herzhaft und pikant mit einer stark abgeschwächten Bitternote.

### 2. Kekse

Die Verfahrensschritte sind wie folgt:
- Fermentationskuchen (ca. 200 g)
- 100 ml Milch
- 5 Eßlöffel Zucker
- 1 Päckchen Vanillezucker
- 8 Eßlöffel Getreidemahlerzeugnisse wie Weizenmehl, Roggenmehl, Dinkelmehl, Vollkornmehle
- 2 Teelöffel Backpulver
- 100 g gemahlene oder gehackte Nüsse (z. B. Walnüsse, Haselnüsse, Mandeln)
- 200 g wahlweise Rosinen, Schokostreusel, Schokomüsli, getrocknete Früchte.

Der Fermentationskuchen wird zerkleinert und mit den angegebenen Zutaten zu einem Teig vermischt. Die erhaltene Masse wird zu Keksen geformt. Anschließend erfolgt das Backen mit einer Backzeit von ca. 15 min bis 35 min bei einer Backtemperatur von 150 °C bis 230 °C. Das Endprodukt weist keinerlei Merkmale vom Ausgangsprodukt Raps auf, sondern ist sensorisch in jeder Hinsicht kekstypisch.

### 3. Frühlingsrollen

Die Verfahrensschritte sind wie folgt:
- Fermentationskuchen (ca. 100 g)
- 1/2 l Milch
- Vanillepuddingpulver
- 2 - 3 Eßlöffel Zimt
- 150 g Rosinen
- 150 g Mandeln (geraspelt)
- 1 Päckchen Vanillezucker
- 50 g Semmelbrösel.

Der Fermentationskuchen wird zerkleinert und mit den angegebenen Zutaten vermischt. Ein auf herkömmliche Weise hergestellter Frühlingsrollen-Teig wird mit der so erhaltenen Masse belegt und in Rollenform gebracht. Der Geschmack entspricht den Erwartungen an eine Frühlingsrolle mit leicht pikanter Note.

Die Erfindung ist nicht auf die beschriebenen Beispiele beschränkt, die auf vielfache Weise abgewandelt werden können. Das gilt insbesondere für die angegebenen Verfahrensschritte und die verschiedenen Verfahrensparameter, die nur Beispiele darstellen und in Abhängigkeit vom Einzelfall anders als beschrieben gewählt werden können. Durch Anwendung moderner Rapssorten kann eine weitgehende Angleichung an den FAO-Proteinstandard erhalten werden, wobei die günstigsten Rapssorten ggf. durch Versuche zu ermitteln sind. Allerdings ist klar, daß die Erfindung nicht auf Lebensmittel beschränkt sein soll, die exakt dem FAO-Proteinstandard entsprechen. Auch die Rezepturen für die verschiedenen Speisen stellen nur bevorzugte Ausführungsbeispiele dar und können nach eigenem Wunsch weitgehend frei gewählt werden. Andere Beispiele für derartige, das erfindungsgemäße Fermentationsprodukt enthaltende Lebensmittel sind z. B. Brotschnitten, Brötchen und verschiedene Marinaden.

## Patentansprüche

1. Proteinreiches, pflanzliches Lebensmittel, das ein fettarmes Fermentationsprodukt aus durch die Gewinnung von Rapsöl erhaltenen Rückständen enthält oder aus diesem besteht, **dadurch gekennzeichnet, daß** die Rückstände aus der Rapsölgewinnung mit geschältem Raps stammen.

2. Lebensmittel nach Anspruch 1, **dadurch gekennzeichnet, daß** es das Fermentationsprodukt in zerkleinerter und mit Zutaten vermischter Form enthält.

3. Lebensmittel nach einem der Ansprüche 1 bis 2, **dadurch gekennzeichnet, daß** es in gebackener oder gebratener Form vorliegt.

4. Verfahren zur Herstellung eines fettarmen, proteinreichen, pflanzlichen Lebensmittels wobei Rückstände, die bei der Rapsölgewinnung erhalten werden, zerkleinert, angefeuchtet, ggf. pasteurisiert und auf einen vorgewählten pH-Bereich eingestellt, dann mit einem Schimmelpilz geimpft und danach bis zur Bindung einer Schimmelpilzschicht fermentiert werden, **dadurch gekennzeichnet, daß** aus der Rapsölgewinnung mit geschälter Rapssaat erhaltene Rückstände verwendet werden.

5. Verfahren nach Anspruch 4, **dadurch gekennzeichnet, daß** das Fermentationprodukt erneut pasteurisiert wird.

6. Verfahren nach Anspruch 4 oder 5, **dadurch gekennzeichnet, daß** als Schimmelpilz Rhizopus microsporus verwendet wird.

7. Verfahren nach Anspruch 6, **dadurch gekennzeichnet, daß** der pH-Wert auf einen Wert im Bereich zwischen 3,5 und 4,5 eingestellt wird.

8. Verfahren nach Anspruch 6 oder 7, **dadurch gekennzeichnet, daß** der Aw-Wert auf einen Wert im Bereich zwischen 0,6 und 0,96 eingestellt wird.

9. Verfahren nach einem der Ansprüche 4 bis 8, **dadurch gekennzeichnet, daß** die Fermentation bei Temperaturen zwischen 25 °C und 35 °C erfolgt.

10. Verfahren nach einem der Ansprüche 4 bis 9, **dadurch gekennzeichnet, daß** die Fermentation über einen Zeitraum von 16 h bis 48 h erfolgt.

## Claims

1. Protein-rich, vegetable food product, which contains a low-fat fermentation product composed of residues obtained from rapeseed oil production or is composed thereof, **characterised in that** the residues come from rapeseed oil production using husked rapeseed.

2. Food product according to claim 1, **characterised in that** it contains the fermentation product in crushed form or in a form mixed with ingredients.

3. Food product according to one of claims 1 to 2, **characterised in that** it is provided in baked or roasted form.

4. Method for producing a low-fat, protein-rich vegetable food product, wherein residues formed during rapeseed oil production are crushed, moistened, pasteurised, if necessary, and adjusted to a preselected pH range, then injected with a mould and are then fermented until a mould layer forms, **characterised in that** residues formed from rapeseed oil production using husked rapeseed are used.

5. Method according to claim 4, **characterised in that** the fermentation product is pasteurised once again.

6. Method according to claim 4 or 5, **characterised in that** Rhizopus microsporus is used as mould.

7. Method according to claim 6, **characterised in that** the pH value is set to a value in the range of between 3.5 and 4.5.

8. Method according to claim 6 or 7, **characterised in that** the aw value is set to a value in the range of between 0.6 and 0.96.

9. Method according to one of claims 4 to 8, **characterised in that** fermentation occurs at temperatures between 25°C and 35°C.

10. Method according to one of claims 4 to 9, **characterised in that** fermentation occurs over a period of 16 h to 48 h.

## Revendications

1. Produit alimentaire végétal riche en protéines, qui renferme un produit de fermentation pauvre en graisses provenant de résidus émanant de l'extraction d'huile de colza, ou est constitué dudit produit, **caractérisé par le fait que** les résidus proviennent de l'extraction d'huile de colza avec du colza mondé ou épluché.

2. Produit alimentaire selon la revendication 1, **caractérisé par le fait qu'**il renferme le produit de fermentation sous une forme réduite ou broyée et mélangée à des ingrédients.

3. Produit alimentaire selon l'une des revendications 1 à 2, **caractérisé par le fait qu'**il se présente sous une forme cuite au four, ou rôtie.

4. Procédé de fabrication d'un produit alimentaire végétal riche en protéines et pauvre en graisses, dans lequel des résidus provenant de l'extraction d'huile de colza sont réduits ou broyés, humidifiés, éventuellement pasteurisés et réglés sur une plage de pH présélectionnée, puis une moisissure leur est inoculée, après quoi ils sont soumis à fermentation jusqu'à la formation d'une couche de moisissure, **caractérisé par** l'utilisation de résidus émanant de l'extraction d'huile de colza avec une semence de colza mondée ou épluchée.

5. Procédé selon la revendication 4, **caractérisé par le fait que** le produit de fermentation est soumis à une pasteurisation réitérée ou renouvelée.

6. Procédé selon la revendication 4 ou 5, **caractérisé par** l'utilisation de *Rhizopus microsporus* en tant que moisissure.

7. Procédé selon la revendication 6, **caractérisé par le fait que** la valeur pH est réglée sur une valeur située dans la plage comprise entre 3,5 et 4,5.

8. Procédé selon la revendication 6 ou 7, **caractérisé par le fait que** la valeur d'activité de l'eau est réglée sur une valeur située dans la plage comprise entre 0,6 et 0,96.

9. Procédé selon l'une des revendications 4 à 8, **caractérisé par le fait que** la fermentation a lieu à des températures comprises entre 25 °C et 35 °C.

10. Procédé selon l'une des revendications 4 à 9, **caractérisé par le fait que** la fermentation s'opère durant un laps de temps de 16 h à 48 h.
